(19) Europäisches Patentamt
European Patent Office
Office européen des brevets

(11) EP 2 944 778 B1

# (12) FASCICULE DE BREVET EUROPEEN

(45) Date de publication et mention de la délivrance du brevet:
**01.03.2017 Bulletin 2017/09**

(51) Int Cl.:
**F01N 3/20** (2006.01)   **F01N 9/00** (2006.01)

(21) Numéro de dépôt: **15163843.4**

(22) Date de dépôt: **16.04.2015**

(54) **PROCEDE DE CONTRÔLE DES EMISSIONS POLLUANTES D'UN MOTEUR A COMBUSTION INTERNE**

KONTROLLVERFAHREN DER UMWELTSCHÄDLICHEN EMISSIONEN EINES VERBRENNUNGSMOTORS

METHOD FOR CONTROLLING THE POLLUTING EMISSIONS OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2014 FR 1454224**

(43) Date de publication de la demande:
**18.11.2015 Bulletin 2015/47**

(73) Titulaire: **PEUGEOT CITROËN AUTOMOBILES SA 78140 Vélizy-Villacoublay (FR)**

(72) Inventeurs:
• **Suy, Dara**
  **95360 MONTMAGNY (FR)**
• **Dubois, Vincent**
  **92200 NEUILLY SUR SEINE (FR)**
• **Maréchal, Patrice**
  **92250 LA GARENNE COLOMBES (FR)**

(56) Documents cités:
EP-A1- 2 181 756    FR-A1- 2 952 673
FR-A1- 2 972 221    US-A1- 2012 006 004

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention porte sur un procédé de contrôle des émissions polluantes d'un moteur à combustion interne.

Dans un contexte de dépollution des gaz d'échappement d'un moteur thermique, les systèmes de réduction sélective catalytique, dits aussi systèmes SCR, ont pour but de réduire les oxydes d'azote (NOx) contenus dans les gaz d'échappement. Les systèmes SCR mettent en oeuvre une réaction chimique entre les oxydes d'azote et un agent réducteur prenant classiquement la forme d"ammoniac. L'injection de l'ammoniac dans la ligne d'échappement des gaz est généralement réalisée de façon connue en soi par l'intermédiaire d'une autre espèce chimique (un précurseur), telle que l'urée qui se décompose en ammoniac et en dioxyde de carbone sous l'effet de la chaleur.

Une sonde de mesure des oxydes d'azote, dite sonde NOx, placée en aval du catalyseur permet de corriger les quantités d'agent réducteur à injecter, en cherchant le meilleur compromis entre l'efficacité du système et la désorption de réducteur. En parallèle, les quantités d'agent réducteur sont calculées en permanence en fonction de la quantité de NOx en sortie du moteur, et de l'efficacité estimée du catalyseur SCR.

Les quantités d'agent réducteur à injecter sont liées à l'estimation de l'efficacité du catalyseur SCR. Si cette efficacité est sous-estimée, on injecte insuffisamment d'agent réducteur en sorte que le plein potentiel de conversion du système n'est pas exploité. Si cette efficacité est surestimée une quantité trop importante d'agent réducteur est injectée, ce qui peut conduire à de la désorption d'ammoniac.

Les techniques connues d'estimation de l'efficacité du système, telles que celle décrite dans le document FR2952673, sont basées sur une modélisation d'une efficacité d'une réaction entre des oxydes d'azotes présents dans les gaz d'échappement et une quantité d'agent réducteur préalablement stockée dans le catalyseur. Si l'imprécision associée à une telle estimation permet de respecter les normes de dépollution actuelles, elle ne permet pas de respecter les futures normes qui sont plus sévères. Il est donc nécessaire de réduire l'imprécision engendrée par les techniques d'estimation connues.

L'invention vise à répondre efficacement à ce besoin en proposant un procédé de contrôle d'un système de réduction sélective catalytique assurant un traitement des oxydes d'azote présents dans une ligne d'échappement d'un moteur à combustion interne, ledit système comportant des moyens pour introduire dans ladite ligne d'échappement un agent réducteur en amont d'un catalyseur de réduction des oxydes d'azote, caractérisé en ce que ledit procédé comporte une étape d'estimation d'une efficacité, dite efficacité totale, du système à partir d'une modélisation de l'efficacité d'une première réaction, dite efficacité due à l'injection, entre une quantité d'agent réducteur nouvellement injectée et des oxydes d'azote présents en amont dudit catalyseur ainsi que d'une modélisation d'une efficacité d'une deuxième réaction, dite efficacité due au chargement, entre des oxydes d'azotes restants après la première réaction et une quantité d'agent réducteur stockée dans ledit catalyseur.

L'invention permet ainsi d'améliorer la précision de l'estimation de l'efficacité de conversion en prenant en compte l'efficacité de la réaction se produisant en entrée du catalyseur avec l'agent réducteur nouvellement injecté. En outre, l'efficacité totale maximale atteignable étant supérieure à l'efficacité maximale déterminée par le procédé selon l'état de l'art, l'invention permet de réduire de manière substantielle les émissions de dioxyde de carbone. Il est à noter également que l'invention ne nécessite pas de modification organique du système SCR mais uniquement une adaptation logicielle du calculateur moteur du véhicule, ce qui limite son coût de mise en oeuvre.

Selon une mise en oeuvre, la modélisation de l'efficacité due à l'injection est proportionnelle à un rapport entre une quantité d'agent réducteur injectée et une quantité d'agent réducteur optimale correspondant à une quantité stoechiométrique.

Selon une mise en oeuvre, la modélisation de l'efficacité des deux réactions dépend d'un chargement en agent réducteur et de conditions environnementales consistant notamment en une température du catalyseur, un ratio entre une quantité de dioxyde d'azote et une quantité totale d'oxydes d'azote contenus dans les gaz d'échappement en amont du catalyseur, une vitesse volumique horaire des gaz d'échappement et un vieillissement du système de réduction sélective catalytique.

Selon une mise en oeuvre, l'efficacité totale EffTot modélisée établit la relation suivante entre les oxydes d'azote NOx1Us présents en amont du catalyseur avant la réaction se produisant au moment de l'injection et les oxydes d'azote NOx2Ds restants après la réaction se produisant à l'intérieur du catalyseur:

$$NOx2Ds = NOx1Us * (1 - EffTot)$$

Selon une mise en oeuvre, l'efficacité totale EffTot modélisée s'exprime de la manière suivante:

$$EffTot = 1- (1-rNH3Inj/NH3Optm.EffInj \ (mNH3, \ temp, \ rNO2NOx, \ vvh, \ V)) \ * \ (1-EffLd$$
$$(mNH3', \ temp', \ rNO2NOx', \ vvh', \ V'))$$

EffInj étant l'efficacité due à l'injection,

EffLd étant l'efficacité due au chargement,

rNH3Inj/NH3Optm étant un rapport entre une quantité d'agent réducteur injectée et une quantité d'agent réducteur optimale correspondant à une quantité stoechiométrique, mNH3, mNH3' étant le chargement en agent réducteur du système respectivement au cours de la première et de la deuxième réaction,

temp, temp' étant la température du catalyseur respectivement au cours de la première et de la deuxième réaction,

rNO2NOx, rNO2NOx' étant le ratio entre une quantité de dioxyde d'azote et une quantité totale d'oxydes d'azote (NO2/NOx) contenus dans les gaz d'échappement en amont du catalyseur respectivement au cours de la première et de la deuxième réaction,

vvh, vvh' étant la vitesse volumique horaire des gaz d'échappement respectivement au cours de la première et de la deuxième réaction,

V, V' étant le vieillissement du système de réduction sélective catalytique respectivement au cours de la première et de la deuxième réaction.

Selon une mise en oeuvre, l'agent réducteur prend la forme d'ammoniac.

L'invention a également pour objet un calculateur moteur comportant une mémoire programme stockant des instructions logicielles dont une exécution permet une mise en oeuvre du procédé précédemment décrit.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une ligne d'échappement d'un moteur à combustion interne intégrant un système de type SCR;

La figure 2 est une représentation schématique de la modélisation de l'efficacité du système SCR selon la présente invention.

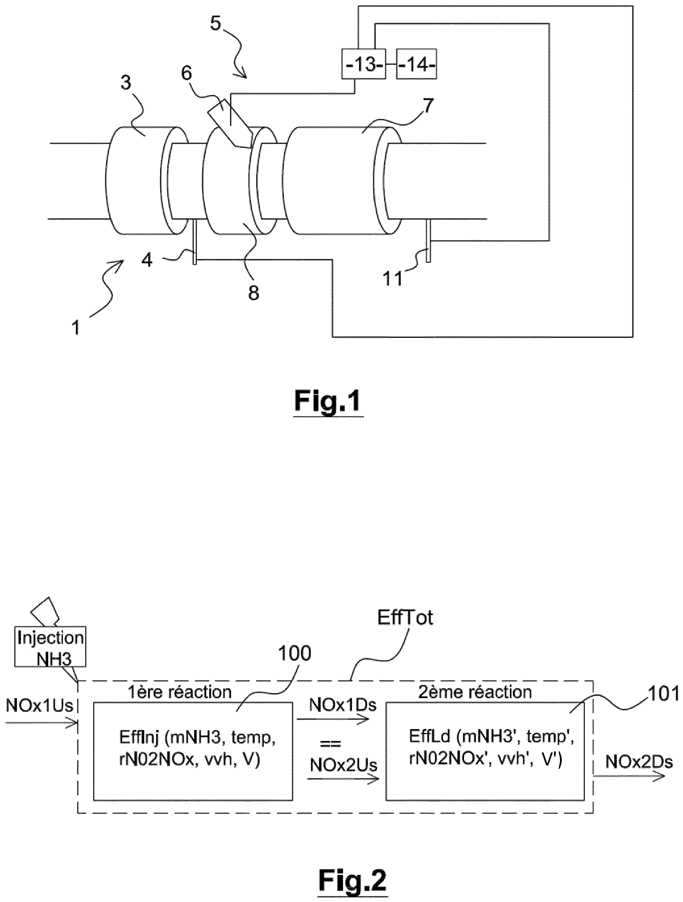

La figure 1 représente une ligne d'échappement 1 d'un moteur thermique sur laquelle est implanté un catalyseur 3 d'oxydation diesel (DOC) dont le rôle premier est de convertir le monoxyde de carbone, et la fraction d'hydrocarbures gazeux imbrûlée ou partiellement brûlée, en dioxyde de carbone, dans les chambres de combustion du moteur.

En continuant dans le sens des gaz d'échappement, on note la présence d'un capteur de température 4 permettant d'estimer la température des gaz d'échappement en amont d'un système 5 de réduction sélective catalytique, dit système SCR.

Ce système SCR 5 est constitué essentiellement par un injecteur 6, relié à une source d'agent réducteur précurseur non représentée ainsi qu'un catalyseur 7. L'injecteur 6 est de préférence associé à un système 8 de décomposition et de mélange de l'agent réducteur intercalé entre le catalyseur DOC 3 et le catalyseur 5.

L'injecteur 6 pourra être muni d'un organe chauffant prenant par exemple de préférence la forme d'une résistance ou d'une bobine de chauffage par induction. On pourra se référer au document FR1352168 pour plus de détails sur la structure d'un tel injecteur. Le système 8 pourra prendre par exemple la forme du système décrit dans le document FR0954199 comportant des parois internes s'enroulant en forme de spirale pour augmenter la distance parcourue par les gaz d'échappement entre le point d'injection et le catalyseur 5. Cela facilite le mélange avec les gaz d'échappement ainsi que l'évaporation des gouttelettes de la solution d'agent réducteur. Alternativement, le système 8 basé sur une autre technologie pourra présenter une autre configuration. Le choix de la configuration du système 8 dépend de l'application envisagée.

La solution d'agent réducteur précurseur injectée dans la ligne d'échappement 1 au niveau du système 8 est de préférence constituée d'urée solubilisée dans de l'eau. L'urée pourra prendre par exemple l'une de ses formes communes énumérées dans le document EP0975417.

De façon bien connue, le catalyseur 7 peut être constitué par une zéolithe déposée sur un support en céramique, par exemple du type cordiérite. Avec un catalyseur 7 à base de zéolithe, la réaction de conversion des NO en NO2 est très peu promue. Avec d'autres catalyseurs, contenant du platine ou du palladium, cette conversion sera par contre plus favorisée.

Un capteur NOx référencé 11 est en outre prévu afin de s'assurer que les émissions du véhicule sont toujours inférieures à une norme d'émission en vigueur.

Comme cela est représenté sur la figure 2, afin d'estimer l'efficacité du système SCR 5, on réalise une modélisation de l'efficacité d'une première réaction, dite efficacité due à l'injection EffInj (cf. bloc 100), entre une quantité d'agent réducteur nouvellement injectée et des oxydes d'azote (NOx) présents en amont du catalyseur 7.

En effet, les injections nouvelles d'ammoniac (NH3) vont d'abord réagir avec les oxydes d'azote (NOx) en entrée du catalyseur SCR 5. La première réaction est donc rapide et utilise l'ammoniac nouvellement injecté pour convertir les oxydes d'azote en entrée du système SCR référencé NOx1Us. Les oxydes d'azote restants en sortie du bloc 100 sont référencés NOx1Ds.

La modélisation de l'efficacité de cette première réaction est proportionnelle à la quantité d'ammoniac injectée. En effet, si on injecte la quantité d'ammoniac à la stoechiométrie, on obtient toute l'efficacité possible EffInj de la première réaction. En revanche, si on n'injecte que la moitié de la stoechiométrie d'ammoniac, on obtient la moitié de l'efficacité possible de la première réaction.

En outre, la modélisation de l'efficacité EffInj est dépendante du chargement en ammoniac mNH3 au cours de cette première réaction, et des conditions environnementales que sont la température du catalyseur temp au cours de la première réaction, le ratio rNO2NOx entre la quantité de dioxyde d'azote et la quantité totale d'oxydes d'azote des gaz en entrée du catalyseur 7 au cours de la première réaction, la vitesse volumique horaire vvh des gaz d'échappement au cours de la première réaction, et le vieillissement V du système SCR.

On modélise ainsi l'efficacité de la première réaction suivant la formule: rNH3Inj/NH3Optm*EffInj (mNH3, temp, rNO2NOx, vvh, V), rNH3Inj/NH3Optm étant un rapport entre une quantité d'ammoniac injectée et une quantité d'ammoniac optimale correspondant à une quantité stoechiométrique.

Par ailleurs, on modélise une efficacité d'une deuxième réaction, dite efficacité due au chargement EffLd (cf. bloc 101), entre les oxydes d'azote restants après la première réaction NOx1Ds et une quantité d'ammoniac stockée dans le catalyseur 7. En effet, l'ammoniac non utilisé au cours de la première réaction va ensuite se stocker dans le catalyseur 7 avec l'ammoniac résiduel des précédentes réactions.

Ces oxydes d'azote NOx1Ds restants après la première réaction deviennent ainsi les oxydes d'azote en entrée de la seconde réaction référencés NOx2Us. Les oxydes d'azote restants après cette seconde réaction sont référencés NOx2Ds.

De manière analogue à l'efficacité EffInj, la modélisation de l'efficacité EffLd est dépendante du chargement en ammoniac mNH3' au cours de la deuxième réaction, et des conditions environnementales que sont la température du catalyseur temp' au cours de la deuxième réaction, le ratio rNO2NOx' entre la quantité de dioxyde d'azote et la quantité totale d'oxydes d'azote des gaz en entrée du catalyseur 7 au cours de la deuxième réaction, la vitesse volumique horaire vvh' des gaz d'échappement au cours de la deuxième réaction, et le vieillissement V' du système SCR.

On a ainsi: EffLd ((mNH3', temp', rNO2NOx', vvh', V')).

L'efficacité totale EffTot du système SCR 5 est modélisée suivant la relation suivante entre les oxydes d'azote en entrée de la première réaction NOx1Us et les oxydes d'azote en sortie de la seconde réaction NOx2Ds:

$$NOx2Ds = NOx1Us * (1 - EffTot)$$

Avec

$$EffTot= 1 - (1 - rNH3Inj/rNH3Optm.EffInj\ (mNH3, temp, rNO2NOx, vvh, V)) * (1-EffLd\ (mNH3', temp', rNO2NOx', vvh', V'))$$

On a identifié que les efficacités EffInj, EffLd étaient dépendantes au premier ordre du chargement mNH3, mNH3', de la température du catalyseur temp, temp', des ratios rNO2NOx, rNO2NOx', de la vitesse volumique horaire vvh, vvh', et du vieillissement V, V' du système SCR 5. Il serait toutefois possible de corriger les efficacités par des paramètres de second ordre.

La modélisation de deux réactions apparaît comme étant le meilleur compromis entre le gain de précision et les ressources en calculs, dans la mesure où la stratégie de contrôle est embarquée sur un calculateur moteur. Il serait toutefois possible de modéliser plus de deux réactions successives, mais cela augmenterait la durée de mise en oeuvre du procédé.

L'invention porte également sur le calculateur moteur référencé 13 sur la figure 1 comportant une mémoire programme 14 stockant des instructions logicielles dont une exécution permet la mise en oeuvre du procédé précédemment décrit. Le calculateur 13 pourra ainsi assurer une estimation de l'efficacité totale EffTot en fonction des signaux reçus des différents capteurs du système 5, notamment les capteurs 4 et 11, suivant la relation précitée. Le calculateur 13 pourra ensuite commander des injections d'agent réducteur dans la ligne d'échappement 1 par le système 5 en se basant sur la modélisation de cette efficacité totale EffTot.

**Revendications**

1. Procédé de contrôle d'un système (5) de réduction sélective catalytique assurant un traitement des oxydes d'azote (NOx) présents dans une ligne d'échappement (1) d'un moteur à combustion interne, ledit système comportant des moyens (6, 8) pour introduire dans ladite ligne d'échappement (1) un agent réducteur en amont d'un catalyseur (7) de réduction des oxydes d'azote, **caractérisé en ce que** ledit procédé comporte une étape d'estimation d'une efficacité, dite efficacité totale (EffTot), du système (5) à partir d'une modélisation (100) de l'efficacité d'une première réaction, dite efficacité due à l'injection (EffInj), entre une quantité d'agent réducteur nouvellement injectée et des oxydes d'azote présents en amont dudit catalyseur (7) ainsi que d'une modélisation (101) d'une efficacité d'une deuxième réaction, dite efficacité due au chargement (EffLd), entre des oxydes d'azotes restants après la première réaction et une quantité d'agent réducteur stockée dans ledit catalyseur (7).

2. Procédé selon la revendication, 1, **caractérisé en ce que** la modélisation de l'efficacité due à l'injection (EffInj) est proportionnelle à un rapport (rNH3Inj/NH3Optm) entre une quantité d'agent réducteur injectée et une quantité d'agent réducteur optimale correspondant à une quantité stoechiométrique.

3. Procédé selon la revendication 1 ou la revendication 2, **caractérisé en ce que** la modélisation de l'efficacité des deux réactions dépend d'un chargement en agent réducteur (mNH3, mNH3') et de conditions environnementales consistant notamment en une température du catalyseur (temp, temp'), un ratio entre une quantité de dioxyde d'azote et une quantité totale d'oxydes d'azote (NO2/NOx) contenus dans les gaz d'échappement en amont du catalyseur, une vitesse volumique horaire (vvh, vvh') des gaz d'échappement, et un vieillissement (V, V') du système (5) de réduction sélective catalytique.

4. Procédé selon l'une quelconque des revendications 1 à 3, **caractérisé en ce que** l'efficacité totale EffTot modélisée établit la relation suivante entre les oxydes d'azote NOx1Us présents en amont du catalyseur avant la réaction se produisant au moment de l'injection et les oxydes d'azote NOx2Ds restants après la réaction se produisant à l'intérieur du catalyseur:

$$NOx2Ds = NOx1Us * (1 - EffTot)$$

5. Procédé selon l'une quelconque des revendications 1 à 4, **caractérisé en ce que** l'efficacité totale EffTot modélisée s'exprime de la manière suivante:

$$EffTot = 1-(1-rNH3Inj/NH3Optm. \; EffInj \; (mNH3, \; temp, \; rNO2NOx, \; vvh, \; V)) * (1-EffLd \; (mNH3', \; temp', \; rNO2NOx', \; vvh', \; V'))$$

EffInj étant l'efficacité due à l'injection,
EffLd étant l'efficacité due au chargement,
rNH3Inj/NH3Optm étant un rapport entre une quantité d'agent réducteur injectée et une quantité d'agent réducteur optimale correspondant à une quantité stoechiométrique,
mNH3, mNH3' étant le chargement en agent réducteur du système respectivement au cours de la première et de la deuxième réaction,
temp, temp' étant la température du catalyseur respectivement au cours de la première et de la deuxième réaction,
rNO2NOx, rNO2NOx' étant le ratio entre une quantité de dioxyde d'azote et une quantité totale d'oxydes d'azote (NO2/NOx) contenus dans les gaz d'échappement en amont du catalyseur respectivement au cours de la première et de la deuxième réaction,
vvh, vvh' étant la vitesse volumique horaire des gaz d'échappement respectivement au cours de la première et de la deuxième réaction,
V, V' étant le vieillissement du système (5) de réduction sélective catalytique respectivement au cours de la première et de la deuxième réaction.

6. Procédé selon l'une quelconque des revendications 1 à 5, **caractérisé en ce que** l'agent réducteur prend la forme d'ammoniac.

7.  Calculateur moteur (13) comportant une mémoire programme (14) stockant des instructions logicielles dont une exécution permet une mise en oeuvre du procédé selon l'une quelconque des revendications précédentes.


**Patentansprüche**

1.  Verfahren zur Kontrolle eines Systems (5) zur selektiven katalytischen Reduktion, das eine Behandlung der Stickstoffoxide (NOx), die in einer Auspuffleitung (1) eines Verbrennungsmotors vorhanden sind, sicherstellt, wobei das System Mittel (6, 8) umfasst, um in die Auspuffleitung (1) ein Reduktionsmittel stromaufwärts eines Katalysators (7) zur Reduktion der Stickstoffoxide einzuführen, **dadurch gekennzeichnet, dass** das Verfahren einen Schritt des Schätzens einer Effizienz, Gesamteffizienz (EffTot) genannt, des Systems (5) ausgehend von einer Modellierung (100) der Effizienz einer ersten Reaktion, einspritzungsbedingte Effizienz (EffInj) genannt, zwischen einer neu eingespritzten Reduktionsmittelmenge und Stickstoffoxiden, die stromaufwärts des Katalysators (7) vorhanden sind, sowie einer Modellierung (101) einer Effizienz einer zweiten Reaktion, ladungsbedingte Effizienz (EffLd) zwischen den Stickstoffoxiden, die nach der ersten Reaktion verbleiben, und einer in dem Katalysator (7) gespeicherten Reduktionsmittelmenge umfasst.

2.  Verfahren nach Anspruch 1, **dadurch gekennzeichnet, dass** die Modellierung der einspritzungsbedingten Effizienz (EffInj) zu einem Verhältnis (rNh3Inj/NH3Optm) zwischen einer eingespritzten Reduktionsmittelmenge und einer optimalen Reduktionsmittelmenge, die einer stöchiometrischen Menge entspricht, proportional ist.

3.  Verfahren nach Anspruch 1 oder Anspruch 2, **dadurch gekennzeichnet, dass** die Modellierung der Effizienz der zwei Reaktionen von einer Ladung mit Reduktionsmittel (mNH3, mNH3') und Umgebungsbedingungen abhängt, die insbesondere aus einer Temperatur des Katalysators (temp, temp'), aus einem Verhältnis zwischen einer Stickstoffdioxidmenge und einer Gesamtmenge an Stickstoffoxiden (NO2/NOx), die in den Abgasen stromaufwärts des Katalysators enthalten sind, einer stündlichen Volumengeschwindigkeit (vvh, vvh') der Abgase und einer Alterung (V, V') des Systems (5) zur selektiven katalytischen Reduktion, bestehen.

4.  Verfahren nach einem der Ansprüche 1 bis 3, **dadurch gekennzeichnet, dass** die modellierte Gesamteffizienz EffTot die folgende Beziehung zwischen den Stickstoffoxiden NOx1Us, die stromaufwärts des Katalysators vor der Reaktion vorhanden sind, die im Augenblick der Einspritzung auftritt, und den Stickstoffoxiden NOx2Ds, die nach der Reaktion, die im Inneren des Katalysators auftritt verbleiben, herstellt:

$$\mathtt{NOx2Ds\ =\ NOx1US\ *\ (1\ -\ EffTot)}$$

5.  Verfahren nach einem der Ansprüche 1 bis 4, **dadurch gekennzeichnet, dass** die modellierte Gesamteffizienz EffTot wie folgt ausgedrückt wird:

$$\mathtt{EffTot\ =\ 1-(1-rNH3Inj/NH3Optm.\ EffInj\ (mNH3,\ temp,}$$
$$\mathtt{rNO2NOx,\ vvh,\ V))\ *\ (1-EffLd\ (mNH3',\ temp',\ rNO2NOx',}$$
$$\mathtt{vvh',\ V'))}$$

wobei EffInj die einspritzungsbedingte Effizienz ist,
EffLd die ladungsbedingte Effizienz ist,
rNH3InJ/NH3Optm ein Verhältnis zwischen einer eingespritzten Reduktionsmittelmenge und einer optimalen Reduktionsmittelmenge, die einer stöchiometrischen Menge entspricht, ist,
mNH3, mNH3' die Ladung mit Reduktionsmittel des Systems jeweils im Laufe der ersten und der zweiten Reaktion ist,
temp, temp' die Temperatur des Katalysators jeweils im Laufe der ersten und der zweiten Reaktion ist,
rNO2NOx, rNO2NOx' das Verhältnis zwischen einer Stickstoffdioxidmenge und einer Gesamtmenge an Stickstoffoxiden (NO2/NOx), die in den Abgasen stromaufwärts des Katalysators jeweils im Laufe der ersten und der zweiten Reaktion enthalten ist, ist,
vvh, vvh' die stündliche Volumengeschwindigkeit der Abgase jeweils im Laufe der ersten und der zweiten Reaktion ist,
V, V' die Alterung des Systems (5) zur selektiven katalytischen Reduktion jeweils im Laufe der ersten und der zweiten Reaktion ist.

6. Verfahren nach einem der Ansprüche 1 bis 5, **dadurch gekennzeichnet, dass** das Reduktionsmittel Ammoniak ist.

7. Motorrechner (13), der einen Programmspeicher (14) umfasst, der Softwareanweisungen speichert, deren Ausführung eine Umsetzung des Verfahrens nach einem der vorhergehenden Ansprüche erlaubt.

**Claims**

1. A method for controlling a selective catalytic reduction system (5) providing a processing of the nitrogen oxides (NOx) present in an exhaust line (1) of an internal combustion engine, said system comprising means (6, 8) for introducing into said exhaust line (1) a reducing agent upstream of a catalyser (7) for reduction of the nitrogen oxides, **characterized in that** said method comprises a step of estimation of an efficiency, designated total efficiency (EffTot), of the system (5) from a modelling (100) of the efficiency of a first reaction, designated efficiency due to injection (Effinj), between a quantity of reducing agent newly injected and nitrogen oxides present upstream of said catalyser (7), and a modelling (101) of an efficiency of a second reaction, designated efficiency due to loading (EffLd), between nitrogen oxides remaining after the first reaction and a quantity of reducing agent stored in said catalyser (7).

2. The method according to Claim 1, **characterized in that** the modelling of the efficiency due to injection (Effinj) is proportional to a ratio (rNH3inj/NH3Optm) between an injected quantity of reducing agent and an optimum quantity of reducing agent corresponding to a stoichiometric quantity.

3. The method according to Claim 1 or Claim 2, **characterized in that** the modelling of the efficiency of the two reactions depends on a loading with reducing agent (mNH3, mNH3') and environmental conditions consisting in particular in a temperature of the catalyser (temp, temp'), a ratio between a quantity of nitrogen dioxide and a total quantity of nitrogen oxides (NO2/NOx) contained in the exhaust gases upstream of the catalyser, an hourly volume velocity (vvh, vvh') of the exhaust gases, and an ageing (V, V') of the selective catalytic reduction system (5).

4. The method according to any one of Claims 1 to 3, **characterized in that** the modelled total efficiency EffTot establishes the following relationship between the nitrogen oxides NOx1Us present upstream of the catalyser before the reaction occurring at the moment of injection and the nitrogen oxides NOx2Ds remaining after the reaction occurring in the interior of the catalyser:

$$NOx2Ds = NOx1Us * (1 - EffTot)$$

5. The method according to any one of Claims 1 to 4, **characterized in that** the modelled total efficiency EffTot is expressed in the following manner:

```
EffTot = 1-(1-rNH3Inj/NH3Optm. EffInj (mNH3, temp,
rNO2NOx, vvh, V) * (1-EffLd(mNH3', temp', rNO2NOx',
vvh', V'))
```

Effinj being the efficiency due to injection,
EffLd being the efficiency due to load,
rNH3inj/NH3Optm being a ratio between an injected quantity of reducing agent and an optimum quantity of reducing agent corresponding to a stoichiometric quantity,
mNH3, mNH3' being the loading with reducing agent of the system respectively during the first and the second reaction,
temp, temp' being the temperature of the catalyst respectively during the first and the second reaction,
rNO2NOx, rNO2NOx' being the ratio between a quantity of nitrogen dioxide and a total quantity of nitrogen oxides (NO2/NOx) contained in the exhaust gases upstream of the catalyser respectively during the first and the second reaction,

vvh, vvh' being the hourly volume velocity of the exhaust gases respectively during the first and the second reaction,

V, V' being the ageing of the selective catalytic reduction system (5) respectively during the first and the second reaction.

6. The method according to any one of Claims 1 to 5, **characterized in that** the reducing agent takes the form of ammonia.

7. An engine control unit (13) comprising a program memory (14) storing software instructions, an execution of which permits an implementation of the method according to any one of the preceding claims.

## Fig.1

## Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952673
- FR 1352168
- FR 0954199
- EP 0975417 A